(19) Europäisches Patentamt

European Patent Office

Office européen des brevets

(11) **EP 1 239 318 B1**

(12) **EUROPEAN PATENT SPECIFICATION**

(45) Date of publication and mention
of the grant of the patent:
**05.04.2006 Bulletin 2006/14**

(51) Int Cl.:
***G02B 27/62*** *(2006.01)*    ***G02B 7/00*** *(2006.01)*

(21) Application number: **01307438.0**

(22) Date of filing: **31.08.2001**

(54) **Optical bench**

Optische Bank

Banc optique

(84) Designated Contracting States:
**DE FR GB NL**

(30) Priority: **07.03.2001 KR 2001011731**

(43) Date of publication of application:
**11.09.2002 Bulletin 2002/37**

(73) Proprietor: **SAMSUNG ELECTRONICS CO., LTD.
Suwon-City, Kyungki-do (KR)**

(72) Inventors:
• **Kim, Jin-hwan
Paldal-gu,
suwon-city,
Gyeonggi-do (KR)**

• **Choi, Hyung
Bundang-gu,
Seongnam-si,
Gyeonggi-do (KR)**

(74) Representative: **Chugg, David John et al
Appleyard Lees,
15 Clare Road
Halifax,
West Yorkshire HX1 2HY (GB)**

(56) References cited:
**EP-A- 0 932 066**      **WO-A-00/75710**
**WO-A-01/65300**      **WO-A-02/10824**
**US-A- 5 841 917**

**Description**

The present invention relates to an optical bench, and more particularly, to an optical bench with improved structure, in which the optical path is shortened and tolerance for misalignment of optical elements is great.

Recently, with an increase in the amount of data transmitted through an optical communications network, the data transfer method of an optical communication system is changing to a wavelength division multiplexing (WDM) transfer method. As such WDM systems need connection between networks, an optical crossing connector, i.e., an optical bench; is considered as an essential element of the WDM system.

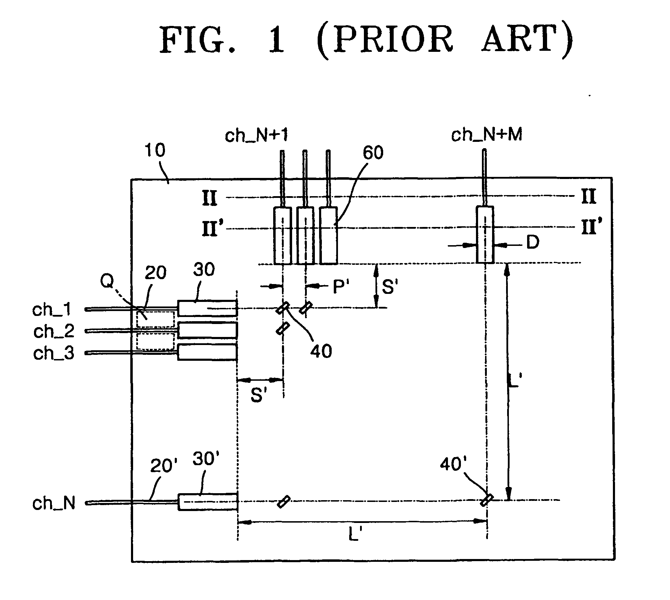

In a conventional optical bench, as shown in Figure 1, a plurality of micro-mirrors 40 are arranged as a matrix on a substrate 10, and a plurality of input optical fibers 20 each for transferring an optical signal to the micro-mirrors 40 and a plurality of output optical fibers 50 each for receiving and transmitting an optical signal reflected from the micro-mirror 40 are arranged. A plurality of input and output optical elements 30 and 60 for condensing and/or diverging an incident beam are arranged between the micro-mirrors 40 and the input and output optical fibers 20 and 50.

The input and output optical fibers 20 and 50 are placed in parallel first V-grooves 25 arranged with a predetermined separation gap therebetween, and the input and output optical elements 30 and 60 are placed in second V-grooves 35 connected to the first V-grooves 25. The input and output optical fibers 20 and 50 are aligned with the input and output optical elements 30 and 60, respectively, along a line. The input and output optical fibers 20 and 50, the input and output optical elements 30 and 60, and the micro-mirrors 40 are aligned with optical axes.

For the optical bench having the configuration described above, a light beam emitted from a light source (not shown) enters an input optical fiber 20 and in turn an input optical element 30, and is reflected by a predetermined micro-mirror 40. The light beam reflected by the micro-mirror 40 is output through an output optical element 60 and an output optical fiber 50.

The optical path of an incident beam can be changed toward an intended output channel by positioning the micro-mirrors 40 to be laid flat or upright on the substrate 10. In particular, when the micro-mirrors 40 are positioned upright on the substrate 10, the incident beam is reflected by the micro-mirrors 40. When the micro-mirrors 40 are positioned to be laid flat on the substrate 10, the incident beam goes straight.

In transferring an optical signal to an intended channel by changing the optical path, as described above, a minimum optical path is formed when an input optical signal received from, for example, an input channel ch_1, through an input optical fiber 20 and an input optical element 30 reaches a micro-mirror 40, which is the nearest to the input optical element 30, through an optical path S', is reflected by the micro-mirror 40, and is output through an optical path S', an output optical element 60a, an output optical fiber 50a, and an output channel ch_(N+1). In this case, the minimum optical path is formed as 2S'.

Meanwhile, a maximum optical path is formed when an optical signal received from an input channel ch_N through an input optical fiber 20' and an input optical element 30N reaches a micro-mirror 40', which is the farthest from the input optical element 30', through an optical path L', is reflected by the micro-mirror 40', and enters an output optical channel ch_(N+M) through an optical path L'. Here, M is the number of output channels, and N is the number of input channels. Supposing that M is equal to N, the maximum optical path 2L' can be expressed as formula (1), using the unit optical path S' and a channel pitch P' between each optical element 30 (60):

$$2L' = 2(S' + (N-1)P'). \qquad\qquad ...(1)$$

In formula (1), N represents the number of output channels. Here, N is equal to M, which is the number of input channels. The channel pitch P' is greater than the diameter D of each optical element since the input and output optical elements 30 and 60 do not perfectly fit into the second V-grooves 35 for the structural characteristic of the V-shaped grooves. Thus, the greater the diameter of optical elements, the greater the channel pitch P' and the greater the maximum optical path 2L'.

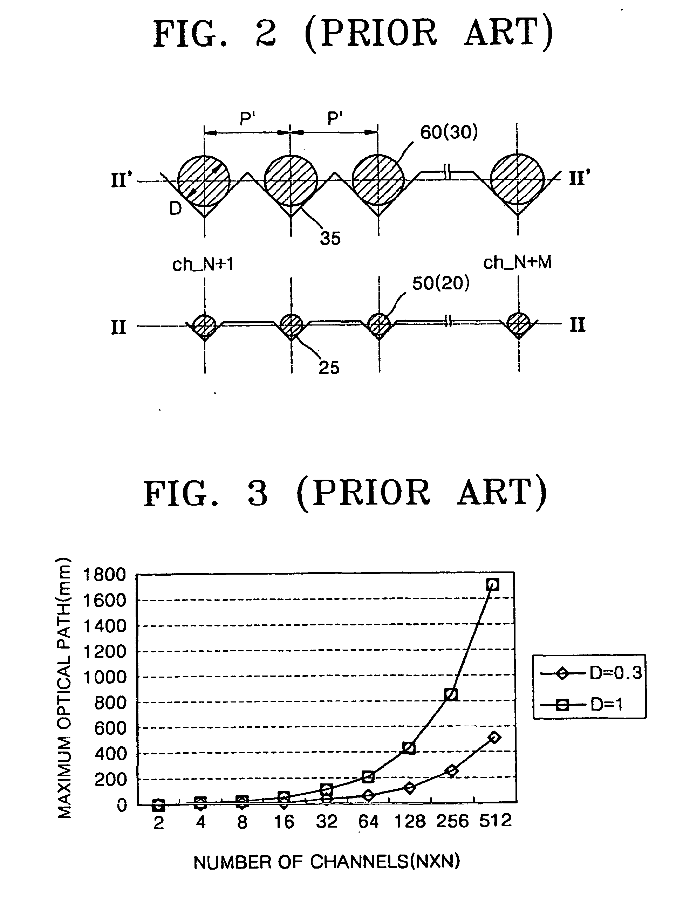

Figure 3 shows the maximum optical path 2L' for each NxN channel structure when the input and output optical elements 30 and 60 have a diameter (D) of 0.3 mm and 1 mm, respectively, and the unit optical path S' is equal to 1 mm. For this maximum optical path calculation, the channel pitch P' is determined to be 66% greater than the diameter (D) of optical element, as usual.

In Figure 3, it is apparent that the length of the maximum optical path 2L' markedly increases with increased number N of channels. For example, for a 128x128 channel structure, when the input and output optical elements 30 and 60 have a diameter (D) of 1 mm, an optical signal should travel the distance 400 times greater than the diameter (D) of the input and output optical elements. As the optical path becomes longer, optical path alignment is getting difficult. Thus, to maintain optical efficiency, an error in reflection angle of the micro-mirror, and an alignment error between the optical elements and optical fibers or between the optical elements and micro-mirrors should be precisely controlled to be small. As a result, manufacturing cost increases due to a rise in assembly expense.

WO0075710 (Optical Micro-machines Inc) discloses an opto-mechanical switching device in which an optical mechanical switching cell is provided which includes an actuator positioned on a substrate and a mirror coupled to the actuator. The switching cell also includes an electrode disposed upon the substrate under the actuator. An insulator may also be interposed between the substrate and the electrode. In another aspect of the invention described in this citation, the switching cell includes a latch having a first end region connected to the substrate and a second end region engaged by the mirror.

US5841917 (Hewlett-Packard Co.) discloses an optical cross-connector switch using a pin grid actuator. The switch is arranged to selectively position optical elements relative to optical beams in the switch. A high density array of aligned, optically reflective elements is attached to the ends of independently selectable and movable pins in the pin grid actuator. The pin grid actuator is the type extensively used in dot matrix printers. Linear motion of the pins causes the reflective element attached to the pin to intercept optical beams provided by input fibers provided coupled to the switch. Intercepted optical beams are redirected to designated output fibers, also coupled to the switch. A staggered arrangement of the input and optical fibers equalises all of the signal path lengths through the switch, regardless of which pin in the pin grid is selected. According to an alternate embodiment, multiple optical cross-connect switches are cascaded using a staggered arrangement of interconnecting fibers.

With a view to reduce or solve the above-described problems, it is an aim of embodiments of the present invention to provide an optical bench with improved structure, in which optical fibers and optical elements are arranged in a staggered fashion to reduce the maximum optical path and tolerance for misalignment of the optical fibers or micro-mirrors becomes great.

According to an aspect of the present invention, there is provided an optical crossing connector in the form of an optical bench comprising: a substrate; a plurality of input optical fibers and a plurality of an output optical fibers for guiding input and output beams respectively, each plurality of the optical fibers being arranged in parallel on the substrate with a predetermined separation gap P therebetween, the optical fibers of a given plurality of optical fibers each having its far end arranged on the substrate for receiving input beams or emitting output beams, each plurality of optical fibers forming a zigzag pattern with far ends of the odd and even optical fibers, such that the far ends of the even input and even output optical fibers are closer to an edge of the substrate than the far ends of odd input and odd output fibers; input and output optical elements having diameter D and arranged at the far end of each input and output optical fiber, for condensing and/or diverging the input and output beams whereby optical fibers and optical elements are arranged in a staggered fashion; and a plurality of micro-mirrors arranged as a matrix on the substrate for receiving the input beam from the input optical elements and reflecting the received input beam toward predetermined channels; the connector being characterised in that the separation gap P of the optical fibers arranged in parallel on the substrate and the diameter D of the input and output optical elements satisfy the relation P≤D.

It is preferable that the optical fibers and elements having their far ends closer to an edge of the substrate are arranged on a different plane to the optical fibers and elements having their far ends further away from an edge of the substrate.

It is preferable that the input and output optical fibers and the input and output optical elements are arranged as multiple layers. Preferably in a multiple layer construction the arrangement for each layer alternates such that odd numbered fibers and elements of one layer are overlaid by even numbered fibers and elements of the next.

For a better understanding of the invention, and to show how embodiments of the same may be carried into effect, reference will now be made, by way of example, to the accompanying diagrammatic drawings in which:

Figure 1 shows the structure of a conventional optical bench;

Figure 1 shows the structure of a conventional optical bench;

Figure 2 shows sections taken along lines II-II and II'-II' of Figure 1;

Figure 3 is a graph showing variations in length of the maximum optical path with respect to the number of channels;

Figure 4 shows the structure of a preferred embodiment of an optical bench according to the present invention;

Figure 5 shows sections taken along lines V-V and V'-V' of Figure 4;

Figure 6 comparatively shows variations in length of the maximum optical path with respect to the number of channels, for the conventional optical bench and the optical bench according to the present invention;

Figure 7 is a graph showing the insertion loss of the optical bench according to the present invention for a 16x16 channel structure; and

Figure 8 is a graph showing the insertion loss of the conventional optical bench for a 16x16 channel structure.

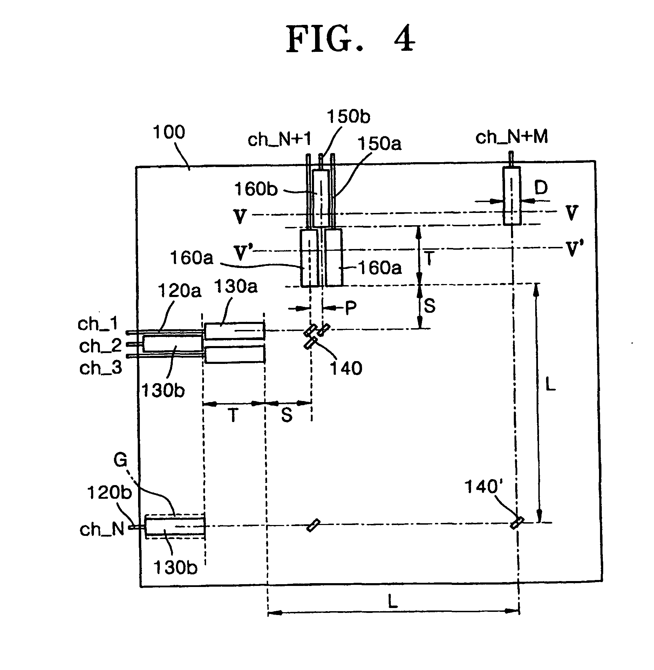

As shown in Figure 4, a preferred embodiment of an optical bench according to the present invention includes a substrate 100, input and output optical fibers 120a, 120b, 150a, and 150b arranged on the substrate 100 with a predetermined separation gap therebetween, for guiding input and output beams, respectively, input and output optical elements 130a, 130b, 160a, and 160b arranged on the substrate 100 in a staggered fashion in connection with the input and output optical fibers 120a, 120b, 150a, and 150b, and a plurality of micro-mirrors 140 arranged in a matrix on the substrate 100, for reflecting a light beam from the input optical elements 130a and 130b towards a predetermined output channel.

In the optical channel having the configuration described above, a light beam emitted from a light source (not shown) enters the input optical fibers 120a and 120b and in turn the input optical elements 130a and 130b and is reflected by the micro-mirrors 140. The light beam reflected by the micro-mirrors 140 is output through the output optical elements 160a and 160b and the output optical fibers 150a and 150b. The input and output optical elements 130a, 130b, 160a, and 160b may be elements for condensing or diverging an incident beam, for example, a ball lens, green lens, or collimating lens.

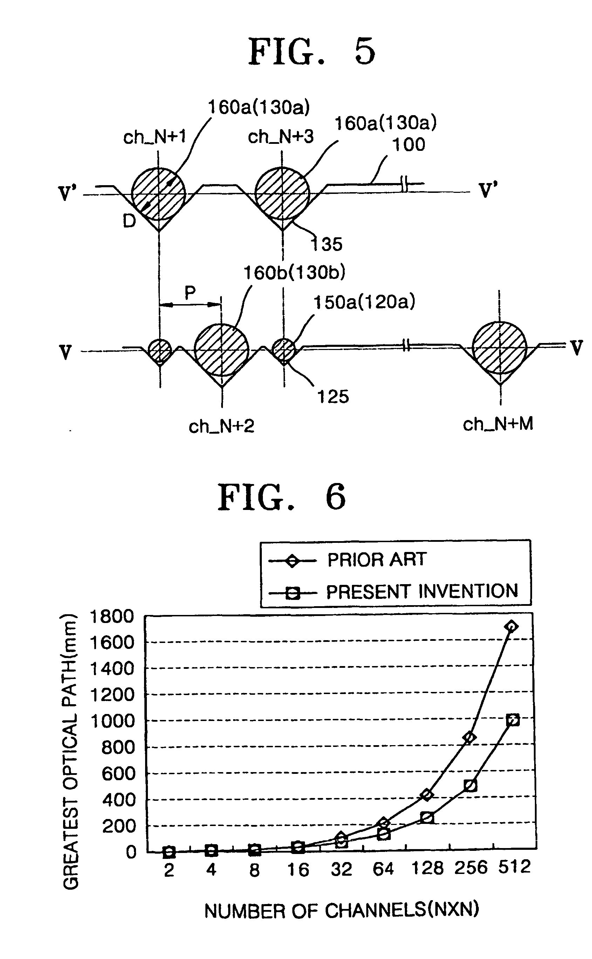

Referring to Figure 5, the input and output optical fibers 120a, 120b, 150a, and 150b are placed in first V-grooves 125 and the input and output optical elements 130a, 130b, 160a, and 160b are placed in second V-grooves 135. The micro-mirrors 140 are tilted 45° with respect to the input and output optical elements 130a, 130b, 160a, and 160b, and upright on the substrate 100 to reflect an incident light beam toward the output optical elements 160a and 160b. Alternatively, the micro-mirrors 140 can be actuated to change an optical path, such that they are laid flat on the substrate 10 and an incident light beam goes straight.

The input and output optical fibers 120a, 120b, 150a, and 150b are arranged in the first V-grooves 125 with a predetermined separation gap therebetween such that far ends of the even input and output optical fibers 120b and 150b are more close to the edge of the substrate 100 than far ends of the odd input and output optical fibers 120a and 150a, forming a zigzag pattern with the far ends of the odd and even input and output optical fibers 120a, 120b, 150a and 150b and leaving a space G between neighboring odd input and output optical fibers 120a and 150a before the far end of each of the even input and output optical fibers 120b and 150b. The odd input and output optical elements 130a and 160a are arranged at the far ends of the odd input and output optical fibers 120a and 150a, and the even input and output optical elements 130a and 160a are arranged in the spaces G. It will be appreciated that the arrangement of the even optical fibers and optical elements and that of the odd optical fibers and optical elements are interchangeable.

The space G is designed so as to utilize an unnecessary space formed due to a difference in width between the second V-grooves 135 for the input and output optical elements 130a, 130b, 160a, and 160b, and the first V-grooves 125 for the input and output optical fibers 120a, 120b, 150a, and 150b. In particular, as shown in Figure 1, when the input and output optical elements 30 and 60 are arranged along a line, an unnecessary space Q, which corresponds to the difference in width between the first V-grooves 25 and second V-grooves 35, is formed. As a result, the optical path gets longer as much as the unnecessary space Q. The optical bench according to the present invention utilizes the unnecessary space Q as a space for the optical elements, thereby minimizing the optical path.

Alternatively, the input and output optical fibers 120a, 120b, 150a, and 150b, and the input and output optical elements 130a, 130b, 160a, and 160b, which are arranged in a staggered fashion, may be formed as a multilayer structure to further efficiently short the optical path. In this case, the arrangement of optical fibers and optical elements between layers may alternate.

Minimum and maximum optical paths in the optical bench according to the present invention will be described. In Figure 4, "S" denotes a unit optical path which is the shortest optical path between the odd input and output optical elements 130a and 160a and the respective micro-mirrors which are the nearest to the same. "L" denotes an optical path corresponding to the distance between the odd input and output optical elements 130a and 160a and the respective micro-mirrors which are the farthest to the same. "T" denotes the length of the input and output optical elements 130a and 160a, and "P" denotes a channel pitch corresponding to the distance between each optical fiber.

A minimum optical path is formed when an incident beam input through an input channel ch_1 passes an odd input optical element 130a and an optical path S, is reflected by a micro-mirror 140, which is the nearest to the odd input optical element 130a, and outputs through an optical path S and an output channel ch_(N+1). In the case, the minimum optical path corresponds to 2S.

A maximum optical path of the optical bench according to the present invention is formed when an incident beam input through an input channel ch_N passes an even input optical element 130b, the distance corresponding to the length T of each optical element, and an optical path L, is reflected by a micro-mirror 140', which is the farthest from the even input optical element 130b, and outputs through an optical path L, the distance T, and an output channel ch_(N+M). Here, M is the number of ouput channels, and N is the number of input channels. Supposing that M is equal to N, the maximum optical path (2 (T+L)) can be expressed as formula (2):

$$2(T+L) = 2\{(T+S)+(N-1)P\} \qquad \dots (2)$$

where N is the number of output optical elements, which is equal to the number M of input optical elements. The length T of the input and output optical elements 130a, 130b, 160a, and 160b is about a few millimeters, so the increase in the optical path by the length T is negligible. The channel pitch P is less than or equal to the diameter D of the input and output optical elements 130a, 130b, 160a, and 160b. This is because adjacent input and output optical elements 130a, 130b, 160a, and 160b have an overlapping portion due to their arrangement in a staggered fashion. That is, the relation between the channel pitch P and the diameter D of the optical elements satisfies:

$$P \leq D. \qquad \dots (3)$$

Figure 6 comparatively shows variations in length of the maximum optical path with respect to the number of channels, for the conventional optical bench in which the optical fibers and optical elements are arranged along a line and the optical bench according to the present invention in which the optical fibers and optical elements are arranged in a staggered fashion, when the unit optical path S is 1 mm and the input and output optical elements 130a, 130b, 160a, and 160b have a length T of 3 mm and a diameter of 1 mm. As shown in Figure 6, for a 128x128 channel structure, the maximum optical path of the present invention is about 200 mm shorter than that of the conventional optical bench. The greater the number of channels, the greater the difference in length of the maximum optical path between the present invention and

prior art.

Alternatively, although the optical fibers and optical elements are arranged in a staggered fashion on the same plane in the embodiment described above, the optical fibers and optical elements may be arranged as multiple layers or on different planes in such a staggered fashion. When there is a need to arrange the input optical fibers 120a and 120b, output optical fibers 150a, 150b, or input and output optical elements 130a, 130b, 160a, and 160b on different planes, the optical path can be shortened by arranging the optical fibers and optical elements in a staggered fashion.

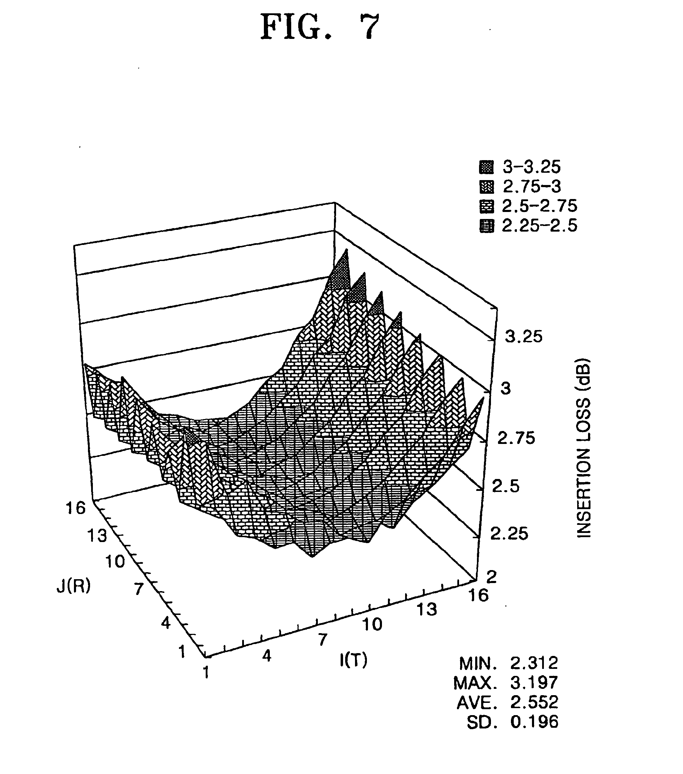

Figure 7 is a graph showing the insertion loss of the optical bench according to the present invention, in which the input and output optical fibers and input and output optical elements are arranged in a staggered fashion, when the micro-mirrors are arranged to be suitable for a 16H16 channel structure. The insertion loss of beam in the input line I (T) and output line J(R) is measured in dB. The maximum insertion loss (Max) is 3.197 dB and the minimum insertion loss (Min) is 2.312 dB. The average maximum insertion loss (Ave) is 2.552 with a standard deviation (SD) of 0.196.

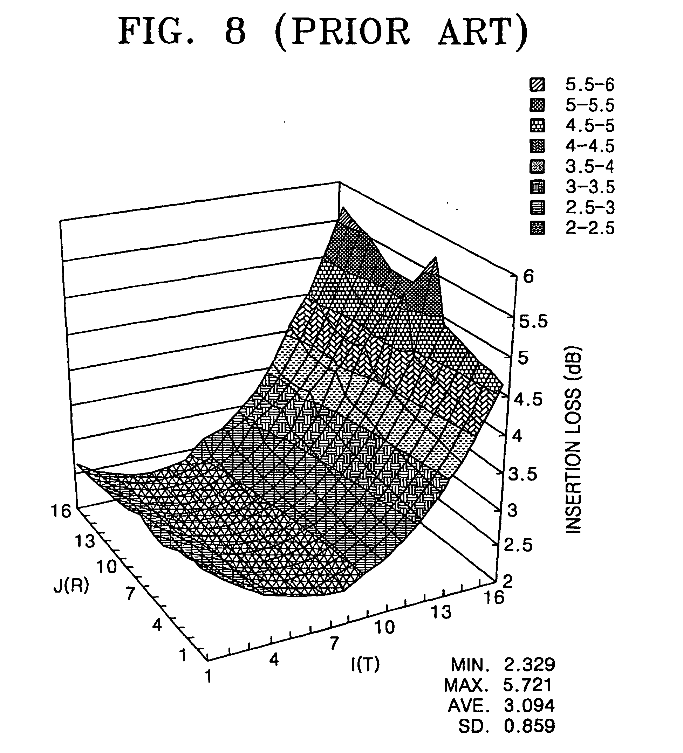

Figure 8 is a graph showing the insertion loss in the input line I(T) and output line J(R) of the conventional optical bench for a 16x16 channel structure, in which the input and output optical fibers and input and output optical elements are arranged along a line. The overall insertion loss is greater than that of Figure 7 for the optical bench according to the present invention. For the conventional optical bench, the maximum insertion loss (Max) is 5.721 dB, which is greater than that of the optical bench according to the present invention, and the minimum insertion loss (Min) is 2.329 dB. The average insertion loss (Ave) of the conventional optical bench is 3.094 dB with a standard deviation (SD) of 0.859. The average insertion loss (Ave) and standard deviation (SD) are greater than those of the optical bench according to the present invention.

From the results, it is evident that the optical path can be appropriated shortened for the optical bench according to the present invention with reduced insertion loss.

As described above, in the optical bench according to the present invention, the optical fibers and optical elements are arranged in a staggered fashion, so that the elements are arranged in a staggered fashion, so that the overall volume of the optical bench can be reduced with optimized space utilization. In addition, the optical path is shortened so that tolerance for misalignment of optical elements becomes great at reduced assembly costs. The optical bench according to the present invention has low insertion loss with maximum coupling efficiency.

While this invention has been particularly shown and described with reference to preferred embodiments thereof, it will be understood by those skilled in the art that various changes in form and details may be made therein without departing from the scope of the invention as defined by the appended claims

**Claims**

1. An optical crossing connector in the form of optical bench comprising: a substrate (100); a plurality of input optical fibers (120a, 120b) and a plurality of output optical fibers (150a, 150b) for guiding input and output beams respectively, each plurality of the optical fibers being arranged in parallel on the substrate with a predetermined separation gap P therebetween, the optical fibers of a given plurality of optical fibers each having its far end arranged on the substrate for receiving input beams or emitting output beams, each plurality of optical fibers forming a zigzag pattern with far ends of the odd and even optical fibers, such that the far ends of the even input (120b) and even output (150b) optical fibers are closer to an edge of the substrate (100) than the far ends of odd input (120a) and odd output (150a) optical fibers; input and output optical elements (130a, 130b, 160a, 160b) having diameter D and arranged at the far end of each input and output optical fiber, for condensing and/or diverging the input and output beams whereby optical fibers and optical elements are arranged in a staggered fashion; and a plurality of micro-mirrors (140) arranged as a matrix on the substrate (100) for receiving the input beam from the input optical elements and reflecting the received input beam toward predetermined channels; the connector being **characterised in that** the separation gap P of the optical fibers arranged in parallel on the substrate (100) and the diameter D of the input and output optical elements (130a, 130b, 160a, 160b) satisfy the relation $P \leq D$.

2. The connector of claim 1, wherin the optical fibers and elements having their far ends closer to an edge of the substrate are arranged on a different plane to the optical fibers and elements having their far ends further away from an edge of the substrate.

3. The connector of claim 1 or 2, wherein the input and output optical fibers and the input and output optical elements are arranged as multiple layers.

4. The connector of claim 3 wherin, in a multiple layer construction the arrangement for each layer alternates such that odd numbered fibers and elements of one layer are overlaid by even numbered fibers and elements of the next.

**Revendications**

1. Connecteur de fibres optiques à croisements, sous la forme d'un banc optique, comprenant : un substrat (100) ; une pluralité de fibres optiques d'entrée (120a, 120b) et une pluralité de fibres optiques de sortie (150a, 150b) pour guider respectivement des faisceaux d'entrée et de sortie, les pluralités de fibres optiques étant disposées chacune parallèlement sur le substrat, en étant séparées l'une de l'autre par un intervalle de séparation prédéterminé P, les fibres optiques d'une pluralité donnée de fibres optiques ayant chacune son extrémité distale disposée sur le substrat pour recevoir des faisceaux d'entrée ou émettre des faisceaux de sortie, chaque pluralité de fibres optiques formant un motif en zigzag avec les extrémités distales des fibres optiques impaires et paires, de telle sorte que les extrémités distales des fibres optiques paires d'entrée (120b) et paires de sortie (150b) sont plus proches d'un bord du substrat (100) que les extrémités distales des fibres optiques impaires d'entrée (120a) et impaires de sortie (150a) ; des éléments optiques d'entrée et de sortie (130a, 130b, 160a, 160b) ayant un diamètre D et disposés à l'extrémité distale de chaque fibre optique d'entrée et de sortie, pour condenser et/ou faire diverger les faisceaux d'entrée et de sortie, grâce à quoi les fibres optiques et les éléments optiques sont disposés en quinconce ; et une pluralité de micromiroirs (140) disposés en matrice sur le substrat (100) pour recevoir le faisceau d'entrée des éléments optiques d'entrée et réfléchir le faisceau d'entrée reçu vers des voies prédéterminées ; le connecteur étant **caractérisé en ce que** l'intervalle de séparation P des fibres optiques disposées parallèlement sur le substrat (100) et le diamètre D des éléments optiques d'entrée et de sortie (130a, 130, 160a, 160b) satisfont la relation $P \leq D$.

2. Connecteur selon la revendication 1, dans lequel les fibres et les éléments optiques dont les extrémités distales sont plus proches d'un bord du substrat sont disposés dans un plan différent de celui des fibres et éléments optiques dont les extrémités distales sont plus éloignées d'un bord du substrat.

3. Connecteur selon la revendication 1 ou 2, dans lequel les fibres optiques d'entrée et de sortie et les éléments optiques d'entrée et de sortie sont disposés en multiples couches.

4. Connecteur selon la revendication 3, dans lequel, dans une structure à multiples couches, l'agencement pour chaque couche alterne de façon que les fibres et éléments à numéros impairs d'une première couche soient couverts par des fibres et éléments à numéros pairs de la suivante.

**Patentansprüche**

1. Optischer Querverbinder in Form einer optischen Bank, der umfasst:

   ein Substrat (100);
   eine Vielzahl optischer Eingangsfasern (120a, 120b)
   und eine Vielzahl optischer Ausgangsfasern (150a, 150b), die Eingangs- bzw. Ausgangsstrahlen leiten, wobei jede Vielzahl optischer Fasern parallel mit einem vorgegebenen Trennabstand P dazwischen auf dem Substrat angeordnet ist und das entfernte Ende der optischen Fasern einer bestimmten Vielzahl optischer Fasern jeweils auf dem Substrat angeordnet ist, um Eingangsstrahlen zu empfangen oder Ausgangsstrahlen zu emittieren, jede Vielzahl der optischen Fasern mit entfernten Enden der ungeradzahligen und der geradzahligen optischen Fasern ein Zickzackmuster bildet, so dass die entfernten Enden der geradzahligen optischen Eingangsfasern (120b) und der geradzahligen optischen Ausgangsfasern (150b) näher am Rand des Substrats (100) liegen als die entfernten Enden ungeradzahliger optischer Eingangsfasern (120a) und ungeradzahliger optischer Ausgangsfasern (150a), optische Eingangs- und optische Ausgangselemente (130a, 130b, 160a, 160b), die einen Durchmesser D haben und am entfernten Ende jeder optischen Eingangsfaser und jeder optischen Ausgangsfaser angeordnet sind, um die Eingangs- und Ausgangsstrahlen zu bündeln und/oder zu streuen, wobei optische Fasern und optische Elemente zueinander versetzt angeordnet sind; und eine Vielzahl von Mikrospiegeln (140), die als eine Matrix auf dem Substrat (100) angeordnet sind, um den Eingangsstrahl von den optischen Eingangselementen zu empfangen und den empfangenen Eingangsstrahl auf vorgegebene Kanäle zu zu reflektieren, wobei der Verbinder **dadurch gekennzeichnet ist, dass** der Trennabstand P der optischen Fasern, die parallel auf dem Substrat (100) angeordnet sind, und der Durchmesser D der optischen Eingangs- und optischen Ausgangselemente (130a, 130b, 160a, 160b) die Beziehung P≤D erfüllen.

2. Verbinder nach Anspruch 1, wobei die optischen Fasern und optischen Elemente, deren entfernte Enden näher an einem Rand des Substrats liegen, auf einer anderen Ebene angeordnet sind als die optischen Fasern und optischen Elemente, deren entfernte Enden weiter von einem Rand des Substrats weg liegen.

3. Verbinder nach Anspruch 1 oder 2, wobei die optischen Eingangs- und optischen Ausgangsfasern sowie die optischen Eingangs- und optischen Ausgangselemente als mehrere Schichten angeordnet sind.

4. Verbinder nach Anspruch 3, wobei in einer Mehrschichtkonstruktion die Anordnung für jede Schicht so wechselt, dass über ungeradzahligen Fasern und Elementen einer Schicht geradzahlige Fasern und Elemente der nächsten Schicht liegen.

# FIG. 1 (PRIOR ART)

# FIG. 2 (PRIOR ART)

# FIG. 3 (PRIOR ART)

NUMBER OF CHANNELS(NXN)

# FIG. 4

# FIG. 5

# FIG. 6

# FIG. 7

# FIG. 8 (PRIOR ART)

MIN. 2.329
MAX. 5.721
AVE. 3.094
SD. 0.859